Europäisches Patentamt

European Patent Office

Office européen des brevets

(19)

(11) Publication number : **0 487 258 A2**

(12) # EUROPEAN PATENT APPLICATION

(21) Application number : **91310529.2**

(22) Date of filing : **14.11.91**

(51) Int. Cl.⁵ : **G01N 29/04, G01N 29/14**

(30) Priority : **19.11.90 GB 9025143**

(43) Date of publication of application :
**27.05.92 Bulletin 92/22**

(84) Designated Contracting States :
**AT BE CH DE DK ES FR GB GR IT LI LU NL SE**

(71) Applicant : **BICC Public Limited Company
Devonshire House Mayfair Place
London W1X 5FH (GB)**

(72) Inventor : **Julian, Keith
4 Westfield Close
Curzon Park North, Chester CH4 8AU (GB)**
Inventor : **Hampton, Robert Nigel
11 Cae Gabriel, Penyca
Wrexham, Clwyd LL14 2PM (GB)**

(74) Representative : **Poole, Michael John et al
BICC plc Group Patents & Licensing Dept.
Quantum House Maylands Avenue
Hemel Hempstead, Hertfordshire HP2 4SJ
(GB)**

(54) **Testing electric cables.**

(57) A non-destructive technique for detecting and observing water-tree formation in an electric cable or a sample or model thereof comprises coupling an acoustic detector to the sample of model and observing acoustic signals in the presence of an alternating voltage stress sufficent to create a risk of water tree formation. The presence of water-trees is indicated by aperiodically repeated occurrence under the said electrical stress of acoustic ringdown signals. Observation at frequencies in the range of 20kHz to 2 MHz is appropriate.

Fig.9.

EP 0 487 258 A2

This invention relates to a method of, and apparatus for, testing electric cables (including models or samples thereof).

High-voltage polymeric-insulated cables are known to be susceptible, in some cases at least, to slow deterioration while in service at least in other than perfectly dry conditions (and especially when exposed to impure liquid water) through the formation of "water-trees". These are small cavities in the insulation, usually of branched, tree-like configuration, that may be filled with water. Such cavities are hereinafter referred to as "water-trees" whether or not the presence of water has contributed to their formation. Once formed, water-trees inevitably grow across the insulation until, eventually, the remaining dielectric is insufficiently thick to withstand the service voltage, and electrical breakdown results.

When breakdown occurs, it destroys the evidence of its cause; and as the position is which a water-tree may form is unpredictable, they are difficult to detect.

In some test regimes, small holes are reamed in test-pieces to initiate formation of water-trees in predictable positions, but as the mechanism of tree inception is uncertain, there is no certainty that the results reflect what would happen in an intact cable. In other test regimes, water-tree formation is observed by exposing cable samples to voltage stress and, before breakdown is observed, sectioning the whole sample for microscopic examination. If the cable performs well, large amounts of time, labour and materials may thus be consumed before any water-trees are observed while samples that have been examined cannot be exposed for extra time, even if no water-trees are observed. Another possible test regime involves exposing a cable to voltage stress until breakdown occurs, and then sectioning and examining the breakdown site; but this technique seldom demonstrates the presence of water-trees.

The present invention provides a non-destructive technique by which a length of cable, a sample cut from a cable, or a model representing a cable, can be tested to determine whether water-trees are present or not. If not, the test can be repeated on the same sample after a suitable time interval at the same or higher exposure voltage; and if they are, their progress can be monitored.

The method of the invention comprises coupling an acoustic detector to a length of cable or model or sample to be tested and observing acoustic signals in the presence of an alternating electric voltage stress sufficient to create a risk of water-tree formation, the presence of water-trees being indicated by aperiodically repeated occurrence under the said electrical stress of acoustic damped oscillations (hereinafter call "ringdown signals").

Acoustic signals can be observed over a wide frequency range; we have detected them throughout the range from 20 kHz to 2 MHz and believe that this range could be further extended if suitable detection equipment became available. Particularly good discrimination can be obtained in the range from 30 kHz to 1MHz. Both the principal frequency and the range of frequencies of ringdown signals appears to vary with the size and/or other characteristics of water-tree present, even for the same material, and it is therefore desirable to observe acoustic signals in a broad frequency band, or better still to observe in a number of different acoustic frequency ranges. Signals can be observed in a broad frequency band using a broadband piezoelectric transducer and at a relatively specific frequency using a resonant piezoelectric transducer. The latter are more sensitive and have a higher signal to noise ratio, at least potentially. Even resonant transducers are sensitive over a significant range of frequencies, and it is practicable and useful to provide for observations over a broad frequency continuum by using a plurality of resonant transducers with overlapping sensitivity ranges.

When resonant piezoelectric transducers are used under ideal conditions with small samples formed with reamed holes to promote the formation of water-trees from the outside (a feasible option for the initial screening of new insulating materials) it may be found that significant ringdown events always include at least a few peaks that exceed the maximum (noise) amplitude that is generally observed in the absence of the specified electrical stress but otherwise under the same conditions, sometimes by a factor as large as four. In these special circumstances, the volume of data to be analysed can be drastically and very useful reduced by selecting for analysis the acoustic signals observed at times close to those at which the amplitude exceeds a threshold determined by first observing acoustic signals in the absence of the said electrical stress to determine a maximum amplitude of acoustic signals generally observed without the said electrical stress (but otherwise under substantially the same conditions) and multiplying that maximum amplitude by a chosen factor, say between two and four or thereabouts.

With higher background noise levels and/or larger samples and/or samples without artificial holes that are likely to form trees on the inside of the cable insulation (away from the transducer(s)) and/or currently available broadband transducers, ringdown events may have a peak amplitude that does not exceed the corresponding "noise" level, or exceeds it only marginally; ringdown events can still be identified by analysing the waveform (in particular by observing short term periodicity within ringdown events), through the volume of data required to be analysed is large.

The invention includes apparatus for testing an electric cable or a model or sample thereof for the presence of water-trees comprising at least one acoustic transducer, means for applying to the sample of model an alternating voltage electrical stress sufficient to create a risk of water-tree formation and means for detecting in the output of the said acoustic detector the occurrence of ringdown signals. Preferably the apparatus includes at least one of (a) means for counting ringdown signals (b) means for storing and/or displaying acoustic waveforms in selected time periods in which rindgown signals have been observed and (c) a computer programmed to perform automatically analysis and classification of the waveforms of observed ringdown signals.

Small cable models and small samples cut from real cables can be coupled directly to a piezoelectric or other acoustic transducer, using a grease of suitably high viscosity (at the test temperature) in a conventional manner to avoid interface effects. Lengths of real cable (say over 1m) cannot easily be coupled in this way, and we prefer to immerse the sample in a bath of water or other suitable inert liquid and to couple an acoustic transducer to the liquid via a wall of the bath or a solid body dipped into the liquid at a free upper surface thereof. Solid bodies of silica glass and polymethyl methacrylate (PMMA) have given satisfactory results; in particular, we have obtained good results by coupling a transducer to the base of a hollow body (a "boat") floating on the surface of a water-bath. Preferably the base of such a hollow body is at most 0.5mm thick.

To assist in obtaining clear signals, layers of the cable outside the dielectric screen may be stripped from the test zone; the dielectric screen may also be removed, if desired, but there is then a possibility that treeing phenomena observed may not be the same as those (or may not be all of those) that could have occurred in an intact cable.

Preferably the voltage stress to which the cable length, model or sample is exposed is at (or around) the frequency of the electricity supply system in which the cable might be used, ordinarily 50 - 60 Hz. When testing a length of cable the magnitude of the voltage stress is preferably at least of the same order as would be encountered in service, and more frequent ringdown events of large amplitude can be obtained by using larger stresses (say at least 3.5 times larger); significantly lower stresses suffice when testing small samples or models. The electric stress may be applied at a predetermined steady voltage, or it may be gradually increased in steps or continuously. It is, however, desirable not to reduce the stress level during observation, because experience shows that whereas acoustic signals continue while stress remains constant or increases, they cease when the stress reduces (but reappear after standing for a while, or as soon as the voltage stress begins to rise again). This broadly parallels observation of acoustic emission under mechanical stress, where signals are usually obtained when stress is rising, or when it is falling, but not both (Kaiser Effect).

In general, it is desirable that the electrical stress is not sufficient to produce corona discharge (or any other kind of electric discharge); however, this is not essential as acoustic signals due to discharges can be discriminated from the ringdown signals characteristic of water-tree activity because they are aperiodic, undamped and practically continuous and show a higher amplitude at a given stress level if that level is approached from above, rather than below.

For some insulating materials, the results obtained may vary significantly with the temperature at which observations are made. Where possible, a temperature at which acoustic attenuation in the material is low should be chosen; in particular, rubbery insulating materials should be observed, if possible, at a temperature well above their glass transition temperatures (e.g. above 50°C for typical ethylene/propylene rubber compositions). Polyethylene cross-linked with peroxides is best observed at relatively low temperatures (but preferably not below 50°C, as the growth of water-trees may be slow at lower temperatures).

In a production context, the invention provides a simple and relatively rapid quality-control test; in a research context, analysis of the detected acoustic signals can be used to give insight to the mechanism of water-tree growth, or at least to indicate whether mechanisms differ from case to case.

In a fundamental research contest, large quantities of data may be rapidly collected (for example amplitude, frequency, and damping characteristics [e.g. pulse length] of individual ringdown signals, and numbers of ringdown events in an observation cycle under one or more conditions, inception voltage stress for a particular observation frequency and sensitivity); in a production quality-control contest, it may be sufficient to confirm the absence of acoustic ring-down signals under a single predetermined test condition; and insulation materials and designs considered for development of new cable types can be screened on the basis of the inception voltage for acoustic emission under predetermined conditions.

The invention will be further described, by way of example, with reference to the accompanying drawings in which:

Figure 1 is a diagrammatic representation of apparatus in accordance with the invention;

Figure 2 is a idealised representation of the output of the transducer in the Figure 1 apparatus;

Figures 3 to 6 present in graphical form the output observed during testing of four cable samples by the method of the invention of four small samples cut from cables;

Figure 7 is a diagram showing the application of the method of the invention to a length of cable;

Figure 8 is a diagram (corresponding in part to figure 7) showing a modified method using two transducers; and

Figure 9 is a diagram further illustrating a preferred method in accordance with the invention.

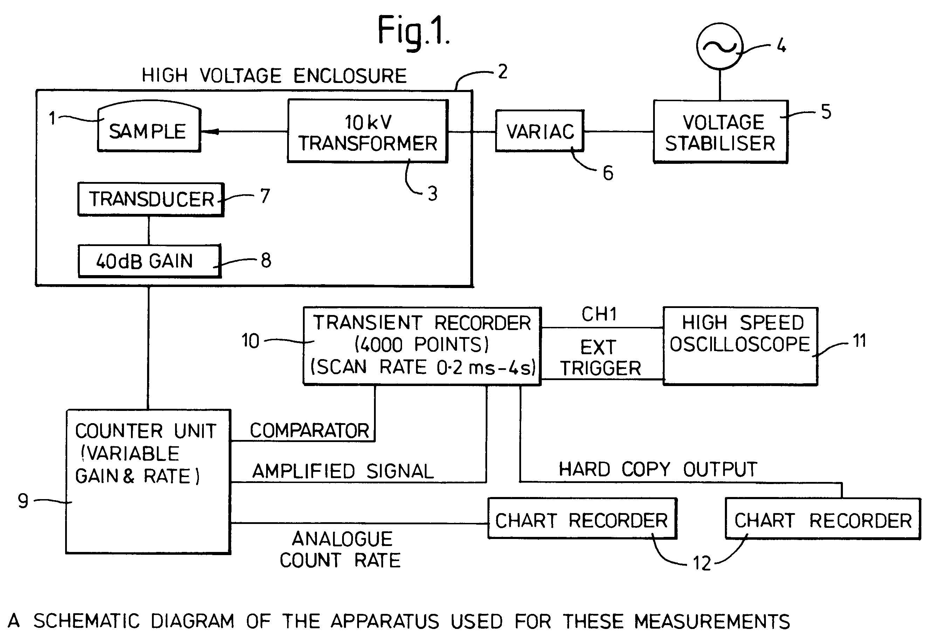

The apparatus of Figure 1 can be dealt with briefly, since it consists of two parts each of which in itself is conventional. The sample (or model) 1 to be tested is enclosed in an earthed metal cage 2 within which is a high voltage transformer 3 for applying the required voltage stress to the sample; this transformer 3 is supplied with power from the mains 4 via voltage stabiliser 5 and a variac (variable transformer) 6 for adjusting the voltage. Customary instrumentation (not shown) may be provided.

Acoustically coupled to the sample 1 is a resonant piezoelectric transducer 7 which inputs signal to a low noise high gain preamplifier 8 whose output is taken (outside the cage 2) to a counter unit 9 which is adjustable in respect of both sensitivity and the period over which counts are made. The amplified signal from the transducer is also passed to a transient recorder 10 which holds a numerical representation of the signal in electronic memory for a short time in order to allow data to be recovered for a period beginning shortly before a triggering event is detected. Waveforms may be displayed on an oscilloscope 11, and the counter unit and/or transient recorder may create permanent records on paper or on tape or other magnetic carrier using appropriate recorders 12.

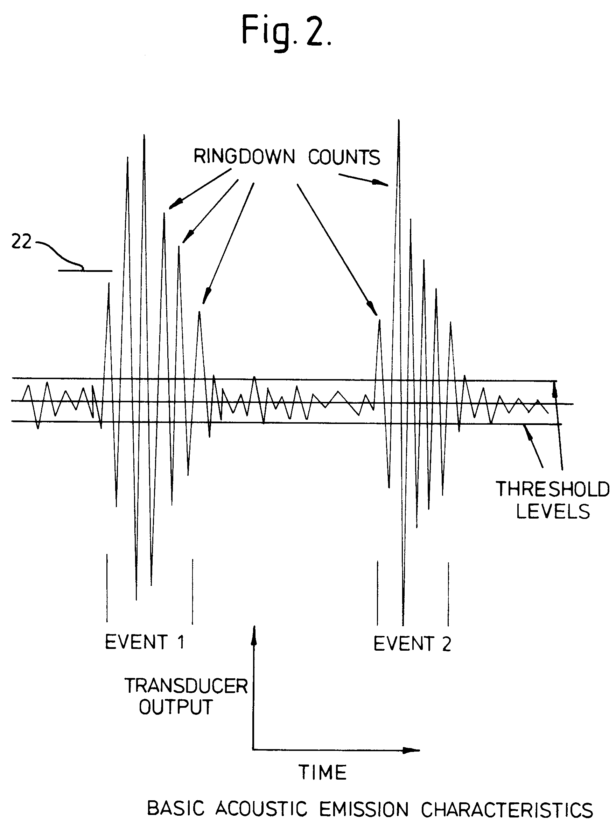

Figure 2 represents a typical output waveform that might be displayed on the oscilloscope 11 when testing small samples in which water-trees are formed at the surface of the sample to which the transducer is coupled (so that the acoustic signal is not attenuated by passage through the thickness of insulating material in the sample) under conditions in which the external noise level is low; continuous random acoustic noise within a maximum amplitude 21 is continuously observed, whether or not voltage stress is applied to the sample. In the presence of voltage stress however, there are additionally observed at irregular interval "ringdown" events, of which two are shown within the figure; these are considered significant at least if they include at least one peak that exceeds a threshold level 22 which is arbitrarily set at four times the level of the nose amplitude maximum 21.

As seen in this example, the ringdown event often includes one or more peaks of intermediate size preceding the first peak that exceeds the threshold 22, hence it could in some cases be useful to have a facility for recovering the part of the signal immediately before a triggering event, namely the exceeding of the threshold 22.

The counter unit 9 may count the number of ringdown events observed, or the total number of ringdown peaks observed or both, over any suitable pre-set period of time. At present we find it convenient to record counts over 10 second periods within a total test time of 5 minutes at each test voltage.

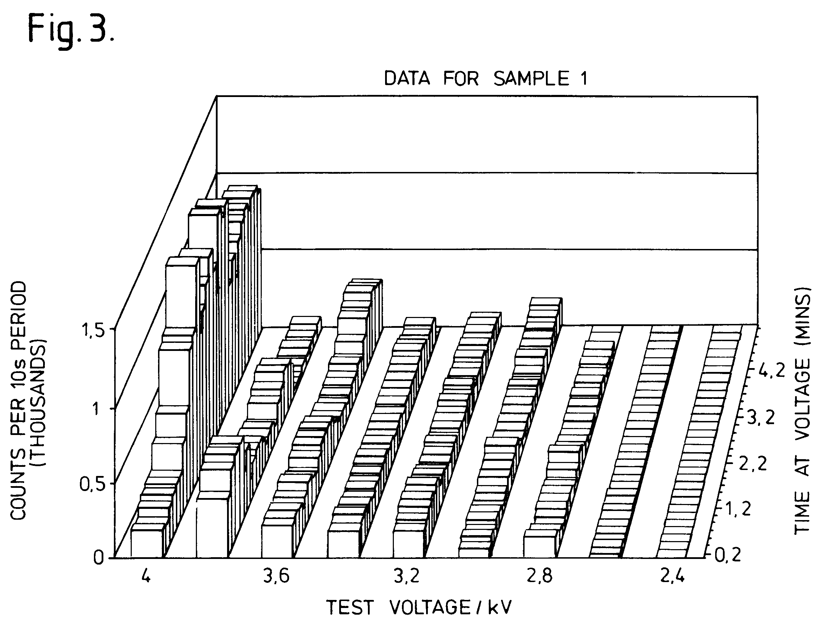

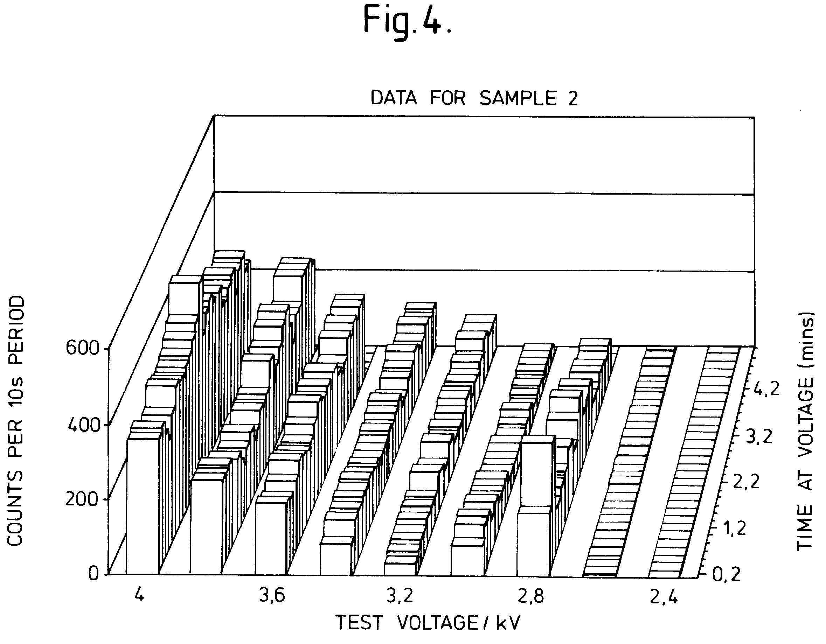

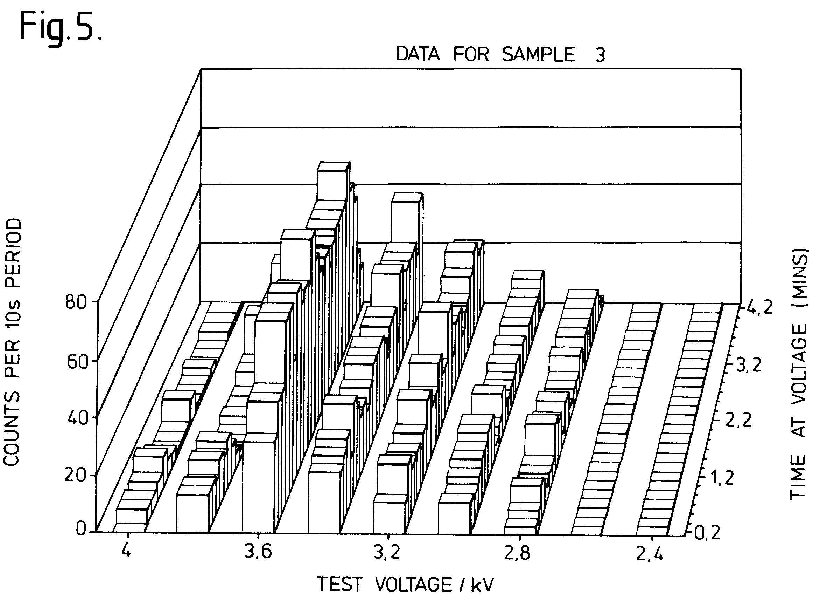

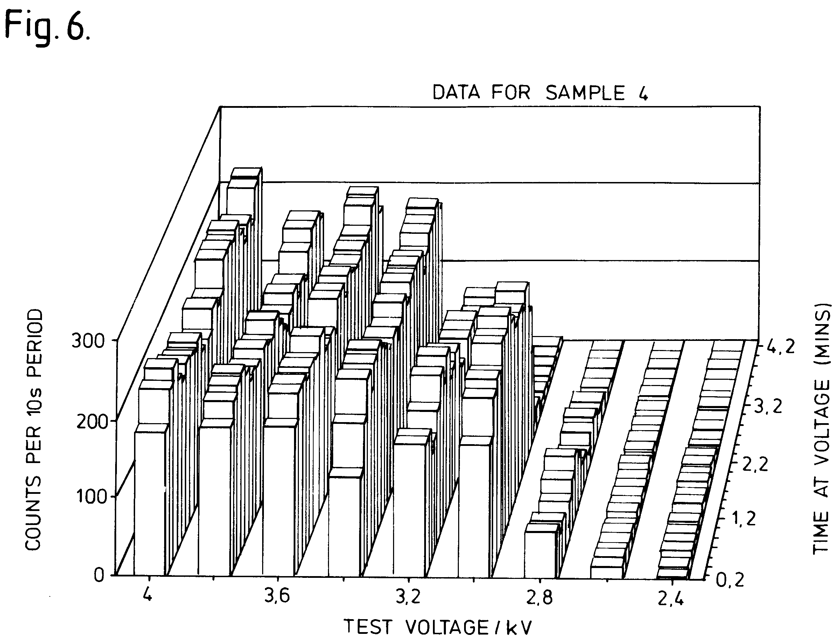

Figures 3 to 6 present, in the form of a "three dimensional" column graph, counter results on the basis of the number of peaks detected for a series of four small samples cut from aged 11kV cables that were expected to contain water-trees. Observations were made (in steps of 200 volts) from 2.4 to 4kV. Note that the "vertical" scale is not the same in the four figures.

Because of the stochastic nature of the ringdown events, it is not practicable to regard as the voltage inception threshold the lowest voltage at which any ringdown count is observed, since this would require indefinitely long exposure to each voltage. For the purpose of these tests, therefore, ringdown inception was arbitrarily defined as the lowest voltage at which the ringdown count exceeded 50 in at least one 10-second period within an overall 5 minutes exposure. On this basis, the countdown inception voltage of samples 1 to 4 as seen in the graphs are 2.8, 2.8, 3.6 and 3.0 kV respectively; tests on samples 1 to 3 but not sample 4 were repeated, yielding a second estimate of the inception voltage which was respectively 2.8, 2.6 and 3.2kV. On this basis, sample 2 had the lowest ringdown inception voltage, and subsequent microscopic examination showed the presence of a water-tree with an estimated maximum dimension of 0.02mm; samples 1 had the second lowest inception voltage, and was found to have a tree with a maximum dimension of 0.08mm; sample 4 ranked third and was found to have a water-tree with a dimension as much as 0.22mm; and sample 3 had the highest ringdown inception voltage and was found to have a tree with a maximum dimension of 0.1mm. Given the uncertainties of the dimensional measurements and recognising that a single dimension, even if accurate, cannot fully characterise a tree of unknown and complex shape, these observation demonstrate a strong if not absolute relationship between ringdown inception voltage and tree size.

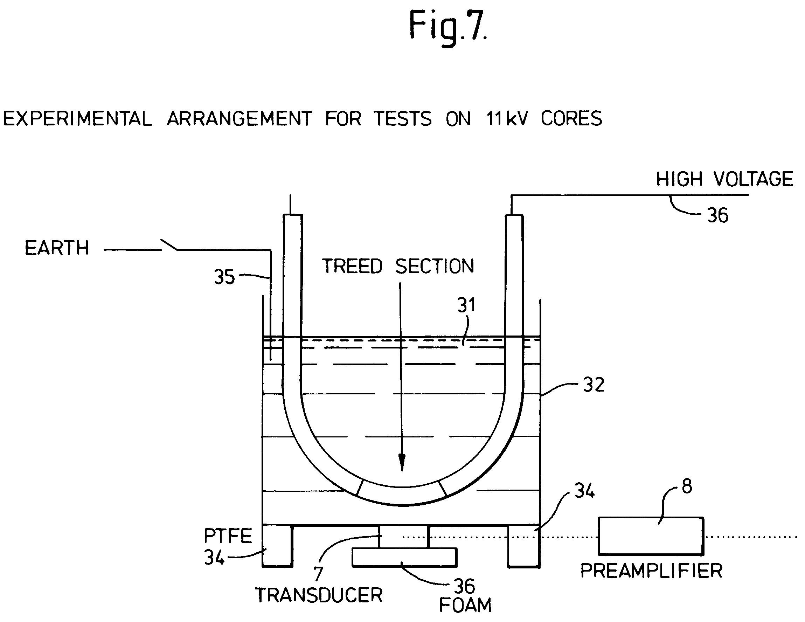

Figure 7 shows a suitable arrangement for making tests on lengths of cable, rather than on small samples cut from them; a central section of the cable is stripped down to the dielectric screen and is immersed in water 31 in a glass tank 32 supported on hard electrically-insulating plastics block, 34. The appropriate test voltage is applied to the conductor of the cable, and the water 31 is preferably connected to earth using an immersed electrode 35. The transducer 7 is coupled to the bottom of the glass tank 32, and may be urged towards it by resilient foam 36 to reduce the risk of the coupling film separating. The transducer 7 is connected to preamplifier 8 as already described in relation to Figure 1.

Three lengths of 11kV silane-crosslinked polyethylene power cable core, each one metre long, were prepared by stripping the dielectric screen from a central portion about 100mm long. In the bared central portion of the dielectric, ten holes were reamed in each sample, 10mm apart, to provide predictable sites for water-tree growth. One sample was aged in water at 16kV ($2.5U_0$, where $U_0$ is the phase-to-phase voltage in service in a 3-phase installation) for 3000 hours, for one for 1000 hours and the third was unaged at the time of the test. Each sample was tested under a number different conditions, as detailed in Appendix A below: either the electric stress generating voltage, with respect to earth, was applied to the central conductor of the cable (indicated by "conductor" in the polarity column in Appendix A) or else to the water in the water bath ("water"); the water bath (when voltage was applied to the conductor) or the cable conductor (when voltage was applied to the water bath) was either earthed or allowed to float (indicated respectively by "earthed" or "not earthed " in the "Earthing" column); and the gain of the preamplifier was set either to 80dB or to 60 dB. Each trial was repeated five times after reducing the stress voltage to zero, and Appendix B tabulates for each trial the number of ringdown counts observed in the first 60 seconds after inception at inception voltage and the value of the inception voltage. These figures illustrate the preferences for test conditions discussed above. Subsequent sectioning showed that the samples aged for 3000 hours had trees with a mean maximum length of 0.15mm and those ages 1000 hours trees with a mean maximum length of 0.01mm; the unaged sample was assumed not to have trees of measurable size, though the acoustic signals are suggestive that tree formation had indeed begun.

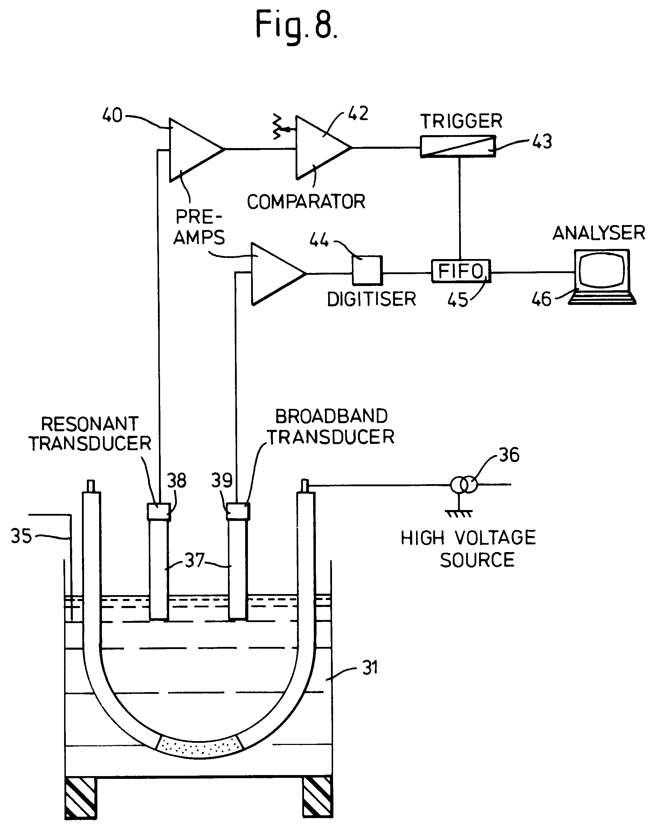

The arrangement of the sample in Figure 8 is generally the same as in Figure 7, with the high voltage source 36 connected to the conductor of the cable length.

Into the bath liquid are dipped two glass rods 37; to one of these is coupled a resonant transducer 38 and to the other a broadband transducer 39; signals from these are fed to respective preamplifiers 40, 41. The output of preamplifier 40 is fed to a comparator 42 and compared with a preset input signal such that it changes state and thus operates a trigger device 43 when the amplitude of the signal from transducer 38 exceeds say four times the maximum noise level observed from it when the high voltage source 36 is turned off.

The signal from preamplifier 41 is converted to digital form (if required) by an analogue/digital converter 44 and continuously fed to a memory device 45, such as a "first in first out" semi-conductor memory. This memory device stores the digital signal it receives for a fraction of a second only, and in the absence of a signal from the triggering device 43 it then discards it. When the triggering device 43 does operate, then the output signal from the memory device 45 (initially recording events that took place a fraction of a second before the triggering event) is fed to an analysing device 46 for a preset length of time sufficient to collect the whole of the (ringdown) event that produced the triggering signal. The signal received at 46 may (as in other versions of the invention) be stored and subjected to any required form of analysis, either electronic or otherwise.

Instead of the broad-band transducer 39, a number of resonant transducers with different resonant frequencies could be used; preferably the frequencies are chosen so that the sensitivity bands of the trandsucers overlap so that the group of transducers, as a whole, is sensitive to acoustic signals over a broad continuum of frequencies.

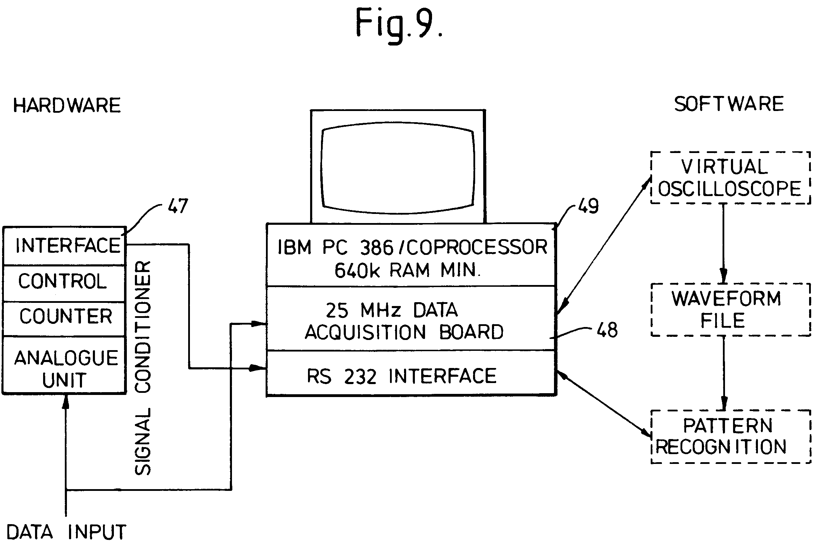

Figure 9 outlines one suitable way of analysing data containing ringdown events, in which the incoming data (bottom left) is simultaneously fed to a signal conditioner unit 47 corresponding to the counter unit 9 of Figure 1 and to a data acquisition board 48 inserted in an expansion slot of a suitable computer 49. An IBM "PC" or equivalent computer with a 386 (or faster) processor board and a maths co-processor and minimum of 640 K of Random Access Memory fitted with a 25 MHz data acquisition board has been found suitable.

The signal conditioner unit 47 supplies count and control signals to the computer via an "RS232" or GPIB (IEEE488) interface. The incoming data is first processed by virtual oscilloscope software and the selected ringdown events recorded in a waveform file in memory or on disc as appropriate, and the stored wave forms are then used as input to a pattern recognition software, of which the one available from Tektrend International Inc under the designation IcePak version 3.00 has been found suitable. This software first defines waveform types on the basis of samples with known characteristics or history and then seeks to match new waveforms to the classes thus defined. Detailed interpretation of the wave forms awaits further experimental work.

Some preliminary observations have been made under the conditions of a factory cable life-test laboratory, using substantial samples (13 feet long) cut from cables that had failed accelerated life tests and which were subsequently demonstrated by sectioning to contain water-trees. Because of the limited number and types of samples tested, numerical results are not useful and will not be presented, but the following points have been demonstrated:

(1) Under these conditions, it was not possible to set an amplitude threshold that would distinguish ringdown peaks from all background noise; but a reduction in data analysis requirements could be achieved by setting a threshold at which only the higher noise peaks generated triggering signals.

(2) Under these conditions, the sensitivity of available broadband piezoelectric transducers was inadequate for some of the cables tested, and in these cases triggering and observations were made with the same resonant transducer (the use of one or more than one separate resonant transducer for making the observations would have been preferred, had they been immediately available).

(3) Once water-trees are present, ringdown counts generally increase with the time of exposure to voltage stress, and differences can be readily observed over time intervals of the order of a hundred hours.

(4) The frequencies of ringdowns also change with exposure time and in some cases this may interact with the sensitivity of the tranducer to mask the effect of exposure time, indicating caution in relying on a single resonant trandsucer.

(5) mean acoustic ringdown signals vary between different cable types, it is thought principally as an effect of the elastic properites of the insulating material (e.g. the maximum ringdown amplitude for a particular peroxide-crosslinked polyethylene cable was at a frequency of about 150kHz but for a silane-crosslinked polyethylene cable the corresponding peak was about 500kHz).

(6) Acoustic signals vary with the level of voltage stress to which the cable has been exposed (ageing voltage); this is assumed to reflect the known differences in the shapes and other characteristics of water-trees formed at different stress levels.

(7) The applied voltage during observation of acoustic signals is preferably in the range $3 - 4.5 U_0$, or better $3.5 - 4U_0$.

## APPENDIX A

EXPERIMENTAL DESIGN
    4 factor linear design
        1 factor at 3 levels
        3 factors at 2 levels

| FACTORS | | LEVELS | |
|---|---|---|---|
| Ageing Time | 0 hours | 1000 hours | 3000 hours |
| Earthing Conditions | not earthed | | earthed |
| Polarity of Stress | applied to conductor | | applied to water |
| Gain of Count Unit | 60dB | | 80dB |

| TRIAL | AGE | EARTHING | POLARITY | GAIN |
|---|---|---|---|---|
| 1 | 3000 | earthed | conductor | 80 |
| 2 | 3000 | earthed | conductor | 60 |
| 3 | 3000 | not earthed | conductor | 80 |
| 4 | 3000 | not earthed | conductor | 60 |
| 5 | 3000 | earthed | water | 80 |
| 6 | 3000 | earthed | water | 60 |
| 7 | 3000 | not earthed | water | 80 |
| 8 | 3000 | not earthed | water | 60 |
| 9 | 1000 | earthed | conductor | 60 |
| 10 | 1000 | earthed | conductor | 60 |
| 11 | 1000 | not earthed | conductor | 80 |
| 12 | 1000 | not earthed | conductor | 60 |
| 13 | 1000 | earthed | water | 80 |
| 14 | 1000 | earthed | water | 60 |
| 15 | 1000 | not earthed | water | 80 |
| 16 | 1000 | not earthed | water | 60 |
| 17 | 0 | earthed | conductor | 80 |
| 18 | 0 | earthed | conductor | 60 |
| 19 | 0 | not earthed | conductor | 80 |
| 20 | 0 | not earthed | conductor | 60 |
| 21 | 0 | earthed | water | 80 |
| 22 | 0 | earthed | water | 60 |
| 23 | 0 | not earthed | water | 80 |
| 24 | 0 | not earthed | water | 60 |

APPENDIX B

Count and inception voltage data for the experiments outlined in Appendix A

| TRIAL | THOUSANDS OF RINGDOWN COUNTS INTHE FIRST 60 SECONDS AFTER INCEPTION (5 REPEATS) | | | | | INCEPTION VOLTAGE/kV (5 REPEATS) | | | | |
|---|---|---|---|---|---|---|---|---|---|---|
| 1 | 4.0 | 76.0 | 77.0 | 47.3 | 15.5 | 8.4 | 8.4 | 8.4 | 8.2 | 8.3 |
| 2 | 0.4 | 6.2 | 1.1 | 8.7 | 0.1 | 8.3 | 8.5 | 8.3 | 8.5 | 8.2 |
| 3 | 0.0 | 0.0 | 0.0 | 0.0 | 0.0 | 13.8 | 13.8 | 13.8 | 13.8 | 13.8 |
| 4 | 0.0 | 0.0 | 0.0 | 0.0 | 0.0 | 13.8 | 13.8 | 13.8 | 13.8 | 13.8 |
| 5 | 41.0 | 22.1 | 18.0 | 18.1 | 14.1 | 8.3 | 8.1 | 8.1 | 8.1 | 8.2 |
| 6 | 4.1 | 5.0 | 3.5 | 0.9 | 4.1 | 8.2 | 8.3 | 8.6 | 8.3 | 8.5 |
| 7 | 0.0 | 4.1 | 0.2 | 2.0 | 7.2 | 8.5 | 8.9 | 8.5 | 8.7 | 8.8 |
| 8 | 0.4 | 6.0 | 3.0 | 0.2 | 0.0 | 8.7 | 8.8 | 8.8 | 8.6 | 8.8 |
| 9 | 0.2 | 0.1 | 0.1 | 0.1 | 0.1 | 3.8 | 3.7 | 3.7 | 3.8 | 3.9 |
| 10 | 0.0 | 0.0 | 0.0 | 0.0 | 0.0 | 13.8 | 13.8 | 13.8 | 13.8 | 13.8 |
| 11 | 0.4 | 0.1 | 0.1 | 0.1 | 0.1 | 3.8 | 3.5 | 4.1 | 4.5 | 4.5 |
| 12 | 0.0 | 0.0 | 0.0 | 0.0 | 0.0 | 13.8 | 13.8 | 13.8 | 13.8 | 13.8 |
| 13 | 0.1 | 1.6 | 1.5 | 1.3 | 0.5 | 7.9 | 8.1 | 8.1 | 8.1 | 8.1 |
| 14 | 0.1 | 0.1 | 0.3 | 0.6 | 0.0 | 8.7 | 8.9 | 9.1 | 9.2 | 8.5 |
| 15 | 0.1 | 2.8 | 0.1 | 0.2 | 1.1 | 7.8 | 8.7 | 8.0 | 7.9 | 8.1 |
| 16 | 0.1 | 0.2 | 0.3 | 0.1 | 0.1 | 8.6 | 8.9 | 9.0 | 8.6 | 8.7 |
| 17 | 0.7 | 0.1 | 0.3 | 0.1 | 0.1 | 9.1 | 8.7 | 8.8 | 8.7 | 8.7 |
| 18 | 0.1 | 0.1 | 0.0 | 0.1 | 0.0 | 12.4 | 10.9 | 10.4 | 11.0 | 10.8 |
| 19 | 0.0 | 0.0 | 0.0 | 0.0 | 0.0 | 13.8 | 13.8 | 13.8 | 13.8 | 13.8 |
| 20 | 0.0 | 0.0 | 0.0 | 0.0 | 0.0 | 13.8 | 13.8 | 13.8 | 13.8 | 13.8 |
| 21 | 0.4 | 0.1 | 0.1 | 1.3 | 0.0 | 8.1 | 7.7 | 8.2 | 8.4 | 7.9 |
| 22 | 0.3 | 0.2 | 0.3 | 0.3 | 0.1 | 9.2 | 8.8 | 8.8 | 9.2 | 8.5 |
| 23 | 0.4 | 0.4 | 0.1 | 0.3 | 1.0 | 8.2 | 8.1 | 8.0 | 8.5 | 8.7 |
| 24 | 0.0 | 0.0 | 0.0 | 0.0 | 0.0 | 13.8 | 13.8 | 13.8 | 13.8 | 13.8 |

## Claims

1. A non-destructive method of testing an electric cable or a model or sample thereof for the presence of water-trees comprising coupling an acoustic detector to the cable, model or sample and observing acoustic signals in the presence of an alternating electric voltage stress sufficient to create a risk of water-tree formation, the presence of water-trees being indicated by aperiodically repeated occurrence under the said electrical stress of acoustic ringdown signals.

2. A method as claimed in claim 1 in which acoustic signals are observed at least one frequency in the range from 20kHz to 2MHz.

3. A method as claimed in claim 1 in which acoustic signals are observed at least one frequency in the range from 30 kHz to 1 MHz.

4. A method as claimed in any one of the preceding claims in which acoustic signals are observed in at least two frequency ranges.

5. A method as claimed in claim 4 in which observations are made over a broad frequency continuum by using a plurality of resonant transducers with overlapping sensitivity ranges.

6. A method as claimed in any one of claims 1-3 in which acoustic signals are observed in a broad frequency band.

7. A method as claimed in any one of the preceding claims in which the said voltage stress is insufficient to produce electric corona discharge.

8. A method as claimed in any one of the preceding claims of testing a length of cable in which the said voltage stress is applied by dipping the length of cable in a liquid bath and applying voltage (relative to earth) to the conductor of the cable length.

9. Apparatus for testing an electric cable or a model or sample thereof for the presence of water-trees comprising at least one acoustic transducer, means for applying to the sample or model an alternating voltage electrical stress sufficient to create a risk of water tree formation and means for detecting in the output of the said acoustic detector the occurrence of ringdown signals.

10. Apparatus as claimed in claim 9 comprising at least one resonant piezoelectric acoustic transducer.

11. Apparatus as claimed in claim 9 comprising a plurality of resonant piezoelectric acoustic transducers with overlapping sensitivity ranges.

12. Apparatus as claimed in any one of claims 9-11 including means for counting ring-down signals.

13. Apparatus as claimed in any one of claims 9-12 including means for storing and/or displaying acoustic waveforms in selected time periods in which said ring-down signals are observed.

14. Apparatus as claimed in any one of claims 9-13 including a computer programmed to analyse and classify the waveforms of the said ringdown signals.

# Fig.1.

A SCHEMATIC DIAGRAM OF THE APPARATUS USED FOR THESE MEASUREMENTS

EP 0 487 258 A2

# Fig. 2.

RINGDOWN COUNTS

22

THRESHOLD
LEVELS

EVENT 1

EVENT 2

TRANSDUCER
OUTPUT

TIME

BASIC ACOUSTIC EMISSION CHARACTERISTICS

Fig. 3.

DATA FOR SAMPLE 1

EP 0 487 258 A2

Fig. 4.

DATA FOR SAMPLE 2

TIME AT VOLTAGE (mins)

TEST VOLTAGE / kV

COUNTS PER 10s PERIOD

Fig.5.

DATA FOR SAMPLE 3

TIME AT VOLTAGE (MINS)

TEST VOLTAGE / kV

COUNTS PER 10s PERIOD

Fig. 6.

DATA FOR SAMPLE 4

COUNTS PER 10s PERIOD

300

200

100

0

4          3,6          3,2          2,8          2,4

TEST VOLTAGE / kV

TIME AT VOLTAGE (MINS)

4,2

3,2

2,2

1,2

0,2

EP 0 487 258 A2

# Fig.7.

EXPERIMENTAL ARRANGEMENT FOR TESTS ON 11kV CORES

HIGH VOLTAGE
36

EARTH

35

TREED SECTION

31

32

PTFE
34

7
TRANSDUCER

36
FOAM

34

8

PREAMPLIFIER

EP 0 487 258 A2

# Fig.8.

# Fig.9.

| INTERFACE |
| CONTROL |
| COUNTER |
| ANALOGUE UNIT |

SIGNAL CONDITIONER

_47_

DATA INPUT

| IBM PC 386/COPROCESSOR 640k RAM MIN. |
| 25 MHz DATA ACQUISITION BOARD |
| RS 232 INTERFACE |

_49_

_48_

VIRTUAL OSCILLOSCOPE

WAVEFORM FILE

PATTERN RECOGNITION

EP 0 487 258 A2